# EUROPEAN PATENT SPECIFICATION

(11) **EP 3 708 525 B1**
(45) Date of publication and mention of the grant of the patent: **07.06.2023**
(21) Application number: 20162343.6
(22) Date of filing: 11.03.2020
(51) Int. Cl.: B65G 69/28

(54) **RAMP FOR A LOADING DOCK AND MANUFACTURING METHOD FOR SAME**
RAMPE FÜR EIN LADEDOCK UND HERSTELLUNGSVERFAHREN DAFÜR
RAMPE POUR UN DOCK DE CHARGEMENT ET METHODE POUR LA FABRIQUER

(30) Priority: 13.03.2019 ES 201930236
(43) Date of publication of application: 16.09.2020
(73) Proprietor: Burgos Quero, Juan, 08150 Parets del Valles (ES)
(72) Inventor: BURGOS QUERO, Juan, 08150 PARETS DEL VALLES (ES); CONEJOS TREPAT, Isidre, BARCELONA (ES); RISPA RODRIGUEZ, Federico, BARCELONA (ES)
(74) Representative: Ponti & Partners, S.L.P

(56) References cited:
- ES-A1- 2 323 101
- ES-U- 1 075 531
- US-A- 5 781 953
- US-B2- 7 430 775

## Description

The present invention relates to a ramp or platform for a loading dock, of those used in loading and unloading facilities for the transit of goods, vehicles and people between loading vehicles and the reception-dispatch areas. The invention also relates to the manufacturing method for said ramp or platform.

### Background of the invention

Known ramps or platforms for loading docks that form part of the prior art are based on a structure with longitudinal and transverse profiles that support a transit surface for goods, vehicles and people.

These ramps or platforms are installed conventionally fixed to the loading docks and can be articulated and contain retracting lips inserted in the ramp structure that are moved out of the transit surface or hide under same, in order to adapt the ramp or platform to the final distance between the loading dock and the loading and unloading surface of the vehicle performing the delivery in said loading dock.

Known ramps or platforms have longitudinal reinforcements generally formed by L- or U-shaped metal profiles which are welded to the transit surface and, at their front and rear ends, to the transverse reinforcements located at said end positions of the ramp or platform.

In this way, the entire vertical part of each longitudinal profile is welded to the internal side of said transverse reinforcements. In turn, the transverse reinforcements are welded to the transit surface, and the auxiliary pieces corresponding to the ramp articulations are welded to their outer faces, on one side, and of the lip, on the other side.

Documents ES1075531 and US5781953 disclose a ramp according to the preamble of claim 1 and a method according to the preamble of claim 7.

This conventional configuration provides an assembly which requires a manufacturing process in which welding unions are established at numerous union segments of the longitudinal reinforcements, transverse reinforcements, and articulation pieces. In addition, in the automation process these welds made by automated robots must perform several horizontal and vertical changes in orientation of said welds, which causes to unproductive movement times in the welding robots and therefore to wasted resources. All of this means that the product requires a considerable manufacturing time and has a high cost in material for the reinforcements and welds.

### Summary of the invention

The aim of the present invention is to provide a ramp for a loading dock and a manufacturing method for same, according to independent claims 1 and 6, which overcomes the aforementioned drawbacks and presents additional advantages that will be described in what follows.

In view of this aim, and according to a first aspect, the present invention provides a ramp for a loading dock of the type having a structure on which a transit surface is installed.

The ramp is characterised in that the ramp structure comprises at least:
- Multiple longitudinal reinforcements;
- One or more transverse reinforcements with a base for attachment to the transit surface having multiple slotted openings, which have a shape complementary to the profile of the longitudinal reinforcements;

The invention is also characterised in that the longitudinal reinforcements are inserted in the slotted openings of the transverse reinforcements, their transverse position in the structure being fixed, where the longitudinal and transverse reinforcements as a whole are jointed to each other and to the transit surface.

Advantageously, the present invention provides an assembly that is much simpler, as the longitudinal reinforcements are inserted in the slotted openings of the transverse reinforcements, arranged in a comb-like manner, so that their transverse position in the structure of the ramp is fixed. If more than one transverse reinforcement is used, said slotted openings shall be arranged preferably aligned, to provide a structure with an orthogonal arrangement between reinforcements.

Preferably, the longitudinal reinforcements have a flat profile at least at their end opposite to their attachment to the transit surface.

This advantageous configuration allows obtaining a ramp structure that is easy to assembly and having a low cost, as the flat profiles used as longitudinal reinforcements are simpler and less costly than those conventionally used, and allow a simpler assembly of the transverse reinforcements between the slotted openings thereof.

Preferably, the structure of the ramp has at least two transverse reinforcements placed essentially at the longitudinal ends of the ramp. This configuration allows an alignment of the longitudinal reinforcements along the entire length of the ramp, with the possibility of installing additional intermediate reinforcements in view of the structural strength demands for the ramp.

Also preferably, when the at least two said transverse reinforcements placed essentially at the longitudinal ends of the ramp are present, the longitudinal reinforcements protrude at their terminuses through each of said transverse reinforcements, said terminuses of the longitudinal reinforcements having openings for the ramp articulation on one end and/or openings for the articulation of the ramp tab on the other end.

This advantageous configuration allows doing without the auxiliary pieces used in conventional configurations to place the articulations of the ramp in the loading dock, and or the lip articulation. In this way, as these articulations are included in the longitudinal reinforcement and can be placed on the outer face of the transverse reinforcement, there are fewer parts and a shorter manufacturing time, as it is not necessary to place and weld individual parts for said articulations.

According to one embodiment of the invention the union between the longitudinal and transverse reinforcements is obtained by welding at the meeting points parallel to the transit surface, which correspond to the end of the slotted opening in which the free end of the longitudinal reinforcement profiles is inserted.

The union by welding at the meeting points allows reducing the union points and welding the unions in the same horizontal direction, that is, parallel to the transit surface, without requiring changing to perpendicular or oblique welds that are not parallel to the transit surface. This reduces the cost of materials and especially lowers manufacturing times.

Alternatively to the above, the union between the longitudinal and transverse reinforcements can be established, in addition to welding at the meeting points at the end of the slotted opening in which the free end of the longitudinal reinforcement profile is inserted, by making complementary weld spots at the insertion points of said profile of the longitudinal reinforcement in the slotted opening of the transverse reinforcement in which it is inserted.

Said additional union spots can be used to resolve a greater strength demand in the design, while prioritising points that do not require changing to a vertical welding direction. That is, preventing changing to welding directions that are perpendicular or oblique to the transit surface and preferring those corresponding to contact points at the base of the slot closest to the transit surface.

According to another aim of the invention, and according to a second aspect thereof, a manufacturing method is provided for a ramp for a loading dock with the aforementioned features as that described previously in the specification, where the components of a ramp structure are joined to a transit surface of said ramp.

This manufacturing method is characterised by comprising at least the following steps:
- inserting the profiles that define the longitudinal profiles in the slotted openings provided in the transverse reinforcements;
- Horizontally welding, at least in part, the longitudinal reinforcements to the transit surface;
- Horizontally welding, at least in part, the transverse reinforcements to the transit surface; and
- Horizontally welding the insertion of the longitudinal reinforcements to the transverse reinforcements, at least at the point of contact between the end of the longitudinal reinforcement profile and the end of the slotted opening of the transverse reinforcement.

In this regard it must be understood that the horizontal welds correspond with the welds parallel to the plane of the transit surface, such that these terms mean the same and are used indistinctly. Similarly, it must be understood that the vertical welds correspond to the welds perpendicular to the plane of the transit surface, as well as to the oblique welds not parallel to the transit surface, such that these terms mean the same and are used indistinctly.

Thus, the present method allows establishing the union of the structure by practically horizontal welds, maintaining the stability and structural strength conditions required for the loads that will be supported. This allows substantially shorter production times for the welding, as the automated robot that makes the welds does not need to change the welding orientation and therefore can make the welded union of the specified points much more quickly, optimising resources and reducing production costs.

Alternatively, the welded union between the longitudinal reinforcements and the transverse reinforcements is established at one or more complementary meeting points parallel to the transit surface, which correspond to the contact points between the longitudinal reinforcement profile and the end of the slotted opening.

The order of the aforementioned steps may be altered according to the industrialisation needs for the product, optionally starting with the joining of the transverse reinforcements to the transit surface, or instead performing first the union between the longitudinal and transverse reinforcements, etc.

As stated before, these additional welding actions can be introduced in view of greater design demands, prioritising the execution of the weld at points that do not require changing to a vertical welding direction; that is, avoiding changes to perpendicular or oblique welding directions, that are not parallel to the transit surface, instead preferring those corresponding to the contact of the base of the slot closest to the transit surface.

This novel configuration of the structure of the invention allows obtaining a structure that is simpler and less costly than conventional structures, with an advantageous union system for said structure and a method for executing said union that allows reducing manufacturing times and therefore the associated costs.

### Brief description of the drawings

For the better understanding of the description made herein, a set of drawings has been provided wherein, schematically and solely by way of a non-limiting example, a practical case of an embodiment is represented.
Figure 1 is a perspective view of a ramp for a loading dock corresponding to the prior art.
Figure 2 is a perspective view of the detail of the longitudinal and transverse reinforcement pieces and the accessories of the embodiments contained in the prior art.
Figure 3 is a perspective view of a ramp for a loading dock according to the present invention.
Figure 4 is a perspective view of the detail of the longitudinal, transverse pieces and the accessories of a ramp for a loading dock according to the present invention.
Figure 5 is a perspective view of the detail of the longitudinal reinforcement pieces installed on the transit surface of a ramp for a loading dock according to the present invention.
Figure 6 is a perspective view of the detail of the longitudinal and transverse reinforcement pieces installed on the transit surface of a ramp for a loading dock according to the present invention.
Figure 7 is a perspective view of the detail of the longitudinal and transverse reinforcement pieces installed on the transit surface of a ramp for a loading dock according to the present invention, marking the welds used and with the articulated lip installed in the ramp.
Figure 8 is a perspective view of the coupling of one end of a longitudinal reinforcement to a transverse reinforcement.

### Description of a preferred embodiment

Several embodiments of the ramp for a loading dock and the manufacturing method for same are described below with reference to the aforementioned figures.

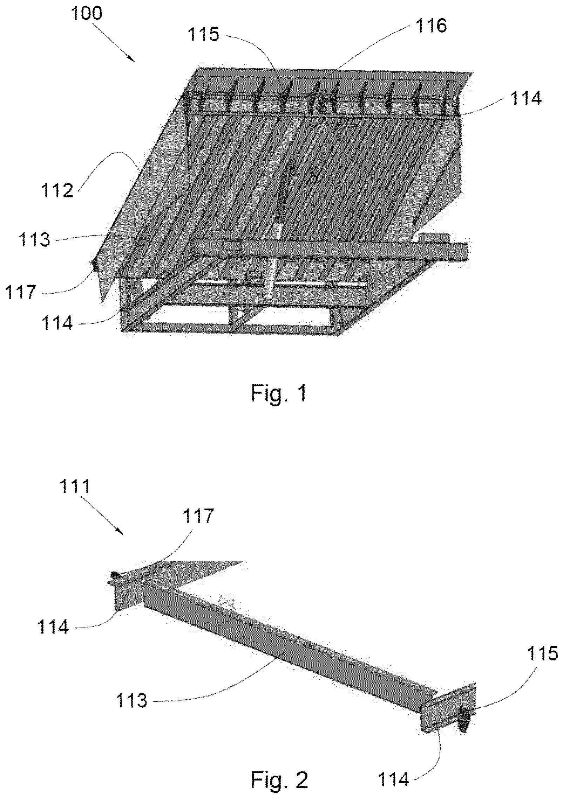

According to a preferred embodiment of the invention, and as shown in figures 1 and 2, the ramps (100) of the prior art have a structure (111) to which a transit surface (112) is joined, where said structure (111) is formed by U-shaped longitudinal reinforcements (113) that are welded horizontally to the transit surface (112) and vertically to each of the transverse reinforcements (114) at which they end.

In the known prior art there are auxiliary pieces (115) that form the articulation openings of the lip (116) and auxiliary pieces (117) that form the articulation openings of the ramp (100), where said pieces (115, 117) are individually welded to the transverse reinforcements at the outer faces thereof to perform said articulated unions to the lip (116) and to the corresponding loading dock in which they are installed, not shown in the figures.

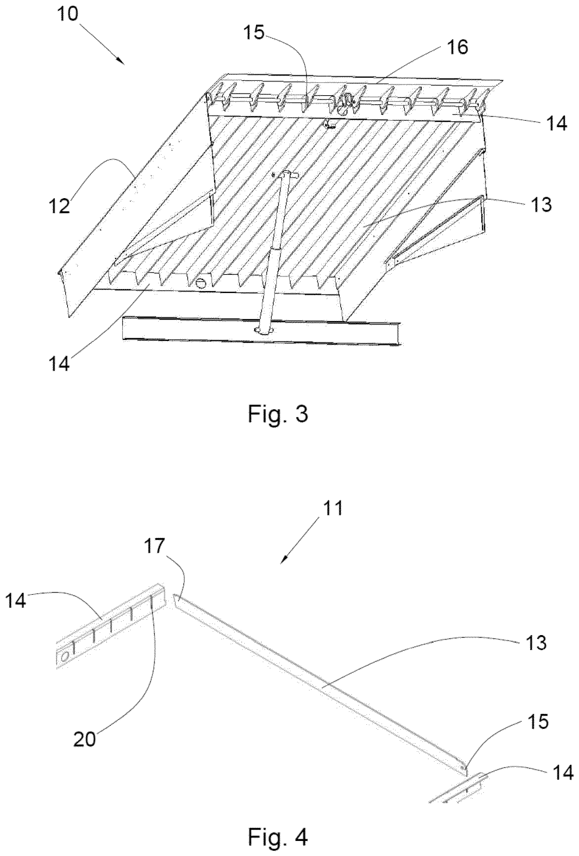

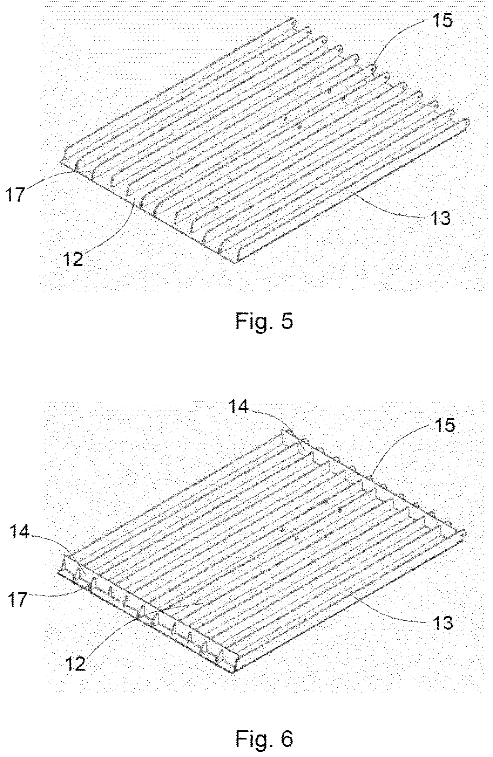

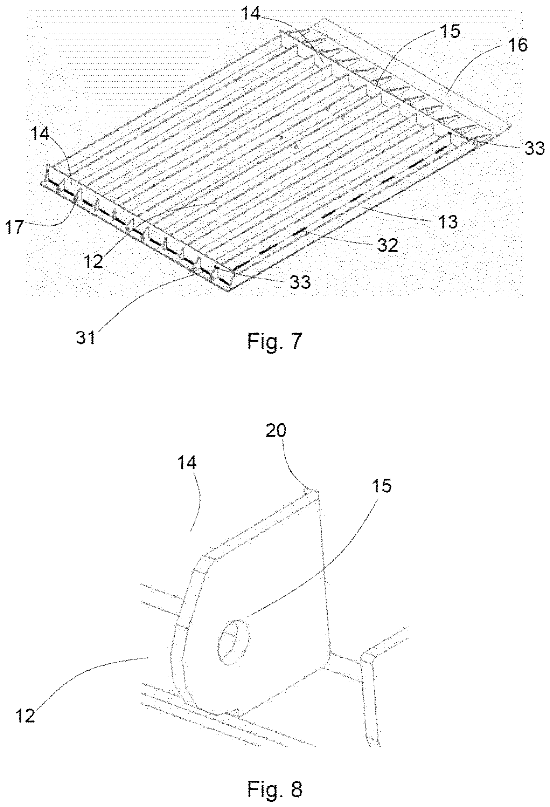

In the present invention, as shown in figures 3 to 7, there is a ramp (10) provided with a structure (11) to which a transit surface (12) is also joined.

The structure (11) of the present invention is formed by a plurality of longitudinal reinforcements (13), formed by a flat metal profile, that are coupled to two transverse reinforcements (14) disposed at the longitudinal ends of the ramp (10) that have slotted openings (20). This coupling is performed by inserting the flat profile that forms the longitudinal reinforcement (13) in said slots (20) of the transverse reinforcements (14).

The coupling takes place such that the terminuses (15, 17) of the longitudinal reinforcements (13) protrude from the outer faces of the transverse reinforcements (14), such that said terminuses (15, 17) at one extreme form the articulation openings (15) of a lip (16) and at the other extreme form the articulation openings (17) of the ramp (10), without requiring the incorporation of auxiliary pieces to form these.

In alternative embodiments there are one or more intermediate transverse reinforcements to improve the structural strength properties of the structure assembly, having the same configuration of slotted openings (20) for coupling to the longitudinal reinforcements (14).

In another alternative embodiment, although not the preferred one as it does not include all the elements that provide more advantages to the invention, at least one longitudinal reinforcement finishes in the inner face of at least one transverse reinforcement, without protruding, requiring auxiliary pieces for the articulations.

To manufacture the ramp (10), the structure (11) is made by engaging the profiles that form the longitudinal reinforcements (13) in the slotted openings (20) disposed in the transverse reinforcements (14)

With this structure (11) assembled, the union to the transit surface (12) is performed by horizontal union welds (32) of the longitudinal reinforcements (13) to said transit surface (12), as well as making horizontal union welds (31) of the transverse reinforcements (14) to said transit surface (12). Between the longitudinal reinforcements (13) and the transverse reinforcements (14), horizontal union welds (33) are made at the point of contact of the free end of the profile of the longitudinal reinforcements (13) and the end of the slotted opening (20).

The assembly steps for attachment to the transit surface (12) or of the structure between its reinforcements (13, 14) can take place before or after any stage indistinctly, according to the preferences for the manufacturing process.

Alternatively, there can be additional horizontal welding points between the longitudinal reinforcements (13) and the transverse reinforcements (14) at the point of contact of the start of the slotted opening (20) next to the transit surface (12).

Although reference has been made to a specific embodiment of the invention, it is evident to a person skilled in the art that the ramp for a loading dock and the manufacturing method for same described is susceptible to numerous variations and modifications, and that all the aforementioned details can be replaced by other technically equivalent ones, without departing from the scope of protection defined by the attached claims.

## Claims

1. Ramp for a loading dock, of those having a structure on which a transit surface is installed, wherein the structure (11) of the ramp (10) comprises at least multiple longitudinal reinforcements (13);
the ramp (10) being **characterised in that** the structure (11) of the ramp (10) comprises at least:
- One or more transverse reinforcements (14) with a base for attachment to the transit surface (12) having multiple slotted openings (20), which have a shape complementary to the profile of the longitudinal reinforcements (13);
wherein the longitudinal reinforcements (13) are inserted in the slotted openings (20) of the transverse reinforcements (14), the transverse position of which in the structure (11) thus being fixed, the longitudinal reinforcements (13) and transverse reinforcements (14) as a whole being joined between said parts and to the transit surface (12).

2. Ramp for a loading dock according to claim 1, wherein the longitudinal reinforcements (13) have a flat profile, at least at their end opposite to their attachment to the transit surface (12).

3. Ramp for a loading dock according to claim 1, wherein the structure (11) of the ramp (10) has at least two transverse reinforcements (14) placed essentially at the longitudinal ends of the ramp (10).

4. Ramp for a loading dock according to claim 3, wherein the longitudinal reinforcements (13) protrude at their terminuses (15,17) out of each of the transverse reinforcements (14) located at the longitudinal ends of the ramp (10), said terminuses (15,17) of the longitudinal reinforcements (13) having articulation means for the ramp (10) at one end and/or articulation means for the lip (16) of the ramp at the other end.

5. Ramp for a loading dock according to any of the previous claims, wherein the union between the longitudinal reinforcements (13) and the transverse reinforcements (14) is obtained by welding at the meeting points (33) parallel to the transit surface (12), which correspond to the end of the slotted opening (20) in which the free end of the profile of the longitudinal reinforcement (13) is inserted.

6. Ramp for a loading dock according to claim 5, wherein the union between the longitudinal reinforcements (13) and the transverse reinforcements (14) is additionally established by complementary welding points at the insertion points of said profile of the longitudinal reinforcements (13) and the slotted opening (20) of the transverse reinforcement (14) in which it is inserted.

7. Manufacturing method for a ramp for a loading dock as described in claims 1 to 6, where the components of a ramp structure are joined to a transit surface of said ramp, **characterised in that** it comprises at least the following steps:
- inserting the profiles that define the longitudinal profiles (13) in the slotted openings (20) provided in the transverse reinforcements (14);
- horizontally welding, at least in part, the longitudinal reinforcements (13) to the transit surface (12);
- horizontally welding, at least in part, the transverse reinforcements (14) to the transit surface (12); and
- horizontally welding the insertion of the longitudinal reinforcements (13) to the transverse reinforcements (14), at least at the point of contact (33) between the end of the profiles of the longitudinal reinforcement (13) and the end of the slotted opening (20) of the transverse reinforcement (14).

8. Manufacturing method according to claim 7, wherein the welded union between the longitudinal reinforcements (13) and the transverse reinforcements (14) is established at one or more complementary meeting points parallel to the transit surface (12), which correspond to the contact points between the profile of the longitudinal reinforcement (13) and the end of the slotted opening (20).

## Patentansprüche

1. Rampe für ein Ladedock, von denen, die eine Struktur aufweisen, auf der eine Transitoberfläche installiert ist, wobei die Struktur (11) der Rampe (10) mindestens mehrere Längsverstärkungen (13) aufweist;
die Rampe (10) **dadurch gekennzeichnet ist, dass** die Struktur (11) der Rampe (10) mindestens umfasst:
eine oder mehrere Querverstärkungen (14) mit einer Basis zur Anbringung an der Transitoberfläche (12), die mehrere geschlitzte Öffnungen (20) aufweist, die eine zu dem Profil der Längsverstärkungen (13) komplementäre Form aufweisen;
wobei die Längsverstärkungen (13) in die geschlitzten Öffnungen (20) der Querverstärkungen (14) eingeführt sind, deren Querposition in der Struktur (11) somit fixiert wird, wobei die Längsverstärkungen (13) und die Querverstärkungen (14) in ihrer Gesamtheit zwischen den genannten Teilen und mit der Transitoberfläche (12) verbunden sind.

2. Rampe für ein Ladedock nach Anspruch 1, wobei die Längsverstärkungen (13) zumindest an ihrem Ende, das ihrer Anbringung an der Transitoberfläche (12) gegenüberliegt, ein flaches Profil aufweisen.

3. Rampe für ein Ladedock nach Anspruch 1, wobei die Struktur (11) der Rampe (10) mindestens zwei Querverstärkungen (14) aufweist, die im Wesentlichen an den Längsenden der Rampe (10) angeordnet sind.

4. Rampe für ein Ladedock nach Anspruch 3, wobei die Längsverstärkungen (13) an ihren Enden (15, 17) aus jeder der an den Längsenden der Rampe (10) angeordneten Querverstärkungen (14) herausragen, wobei die Enden (15, 17) der Längsverstärkungen (13) an einem Ende Gelenkmittel für die Rampe (10) und/oder an dem anderen Ende Gelenkmittel für die Lippe (16) der Rampe aufweisen.

5. Rampe für ein Ladedock nach einem der vorstehenden Ansprüche, wobei die Verbindung zwischen den Längsverstärkungen (13) und den Querverstärkungen (14) durch Schweißen an den Berührungspunkten (33) parallel zu der Transitoberfläche (12) hergestellt wird, die dem Ende der geschlitzten Öffnung (20) entsprechen, in die das freie Ende des Profils der Längsverstärkung (13) eingeführt wird.

6. Rampe für ein Ladedock nach Anspruch 5, wobei die Verbindung zwischen den Längsverstärkungen (13) und den Querverstärkungen (14) durch komplementäre Schweißpunkte an den Einführungspunkten des Profils der Längsverstärkungen (13) und der geschlitzten Öffnung (20) der Querverstärkung (14), in die sie eingeführt wird, zusätzlich hergestellt wird.

7. Verfahren zur Herstellung einer Rampe für ein Ladedock nach einem der Ansprüche 1 bis 6, bei dem die Komponenten einer Rampenstruktur mit einer Transitoberfläche der Rampe verbunden werden, **dadurch gekennzeichnet, dass** es mindestens die folgenden Schritte umfasst:
- Einführen der Profile, die die Längsprofile (13) definieren, in die geschlitzten Öffnungen (20), die in den Querverstärkungen (14) vorgesehen sind;
- zumindest teilweises horizontales Verschweißen der Längsverstärkungen (13) mit der Transitoberfläche (12);
- zumindest teilweises horizontales Verschweißen der Querverstärkungen (14) mit der Transitoberfläche (12); und
- horizontales Verschweißen des Einsatzes der Längsverstärkungen (13) mit den Querverstärkungen (14), zumindest an der Kontaktstelle (33) zwischen dem Ende der Profile der Längsverstärkung (13) und dem Ende der geschlitzten Öffnung (20) der Querverstärkung (14).

8. Herstellungsverfahren nach Anspruch 7, bei dem die Schweißverbindung zwischen den Längsverstärkungen (13) und den Querverstärkungen (14) an einem oder mehreren komplementären Berührungspunkten parallel zur Transitoberfläche (12) hergestellt wird, die den Kontaktpunkten zwischen dem Profil der Längsverstärkung (13) und dem Ende der geschlitzten Öffnung (20) entsprechen.

## Revendications

1. Rampe pour un dock de chargement, de ceux ayant une structure sur laquelle une surface de transit est installée, dans laquelle la structure (11) de la rampe (10) comprend au moins plusieurs renforcements longitudinaux (13) ;
la rampe (10) étant **caractérisée en ce que** la structure (11) de la rampe (10) comprend au moins :
un ou plusieurs renforcements transversaux (14) avec une base pour la fixation à la surface de transit (12) ayant plusieurs ouvertures fendues (20) qui ont une forme complémentaire du profil des renforcements longitudinaux (13) ;
dans laquelle les renforcements longitudinaux (13) sont insérés dans les ouvertures fendues (20) des renforcements transversaux (14), dont la position transversale, dans la structure (11), est ainsi fixée, les renforcements longitudinaux (13) et les renforcements transversaux (14) en tant que tout, étant assemblés entre lesdites parties et à la surface de transit (12).

2. Rampe pour un dock de chargement selon la revendication 1, dans laquelle les renforcements longitudinaux (13) ont un profil plat, au moins au niveau de leur extrémité opposée à leur fixation à la surface de transit (12).

3. Rampe pour un dock de chargement selon la revendication 1, dans laquelle la structure (11) de la rampe (10) a au moins deux renforcements transversaux (14) placés essentiellement au niveau des extrémités longitudinales de la rampe (10).

4. Rampe pour un dock de chargement selon la revendication 3, dans lequel les renforcements longitudinaux (13) font saillie au niveau de leurs terminaisons (15, 17) hors de chacun des renforcements transversaux (14) positionnés au niveau des extrémités longitudinales de la rampe (10), lesdites terminaisons (15, 17) des renforcements longitudinaux (13) ayant un moyen d'articulation pour la rampe (10) à une extrémité et/ou un moyen d'articulation pour la lèvre (16) de la rampe à l'autre extrémité.

5. Rampe pour un dock de chargement selon l'une quelconque des revendications précédentes, dans laquelle l'union entre les renforcements longitudinaux (13) et les renforcements transversaux (14) est obtenue par soudage au niveau des points de réunion (33) parallèles à la surface de transit (12), qui correspondent à l'extrémité de l'ouverture fendue (20) dans laquelle l'extrémité libre du profil du renforcement longitudinal (13) est insérée.

6. Rampe pour un dock de chargement selon la revendication 5, dans laquelle l'union entre les renforcements longitudinaux (13) et les renforcements transversaux (14) est de plus établie par points de soudage complémentaires au niveau des points d'insertion dudit profil des renforcements longitudinaux (13) et de l'ouverture fendue (20) du renforcement transversal (14) dans laquelle elle est insérée.

7. Procédé de fabrication pour une rampe pour un dock de chargement selon les revendications 1 à 6, dans lequel les composants d'une structure de rampe sont assemblés à une surface de transit de ladite rampe, **caractérisé en ce qu'**il comprend au moins les étapes suivantes consistant à :
insérer les profils qui définissent les profils longitudinaux (13) dans les ouvertures fendues (20) prévues dans les renforcements transversaux (14) ;
souder horizontalement, au moins en partie, les renforcements longitudinaux (13) sur la surface de transit (12) ;
souder horizontalement, au moins en partie, les renforcements transversaux (14) sur la surface de transit (12) ; et
souder horizontalement l'insertion des renforcements longitudinaux (13) sur les renforcements transversaux (14), au moins au niveau du point de contact (33) entre l'extrémité des profils du renforcement longitudinal (13) et l'extrémité de l'ouverture fendue (20) du renforcement transversal (14).

8. Procédé de fabrication selon la revendication 7, dans lequel l'union soudée entre les renforcements longitudinaux (13) et les renforcements transversaux (14) est établie à un ou plusieurs points de réunion complémentaires parallèles à la surface de transit (12) qui correspondent aux points de contact entre le profil du renforcement longitudinal (13) et l'extrémité de l'ouverture fendue (20).
